Europäisches Patentamt

European Patent Office

Office européen des brevets

(19)

(11) **EP 1 126 654 A2**

(12) **EUROPÄISCHE PATENTANMELDUNG**

(43) Veröffentlichungstag:
**22.08.2001 Patentblatt 2001/34**

(51) Int Cl.⁷: **H04L 9/08**

(21) Anmeldenummer: **01103356.0**

(22) Anmeldetag: **13.02.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **15.02.2000 DE 10006628**

(71) Anmelder: **SIEMENS AKTIENGESELLSCHAFT**
**80333 München (DE)**

(72) Erfinder:
• **Hoffmann, Gerhard**
  **82223 Eichenau (DE)**
• **Lukas, Klaus**
  **81739 München (DE)**

(54) **Verfahren zum Ermitteln einer Zufallszahl von mindestens einem Computer-Server für einen Computer-Client und diesbezügliches Kommunikationssystem**

(57)    Es wird von dem Computer-Client (101) eine Anforderungsnachricht (203) an den Computer-Server (107) gesendet, mit der das Erzeugen einer Zufallszahl angefordert wird. Der Computer-Server erzeugt eine Zufallszahl und sendet diese an den Computer-Client (211). Der Computer-Client empfängt die Zufallszahl in einer ihm übersendeten Zufallszahlnachricht (212).

**FIG 2**

**Beschreibung**

Die Erfindung betrifft ein Verfahren zum Ermitteln einer Zufallszahl von mindestens einem Computer-Server für einen Computer-Client und ein Kommunikationssystem mit einer Vielzahl vom Computer-Clients und mindestens einem Computer-Server sowie Computer-Server zum Erzeugen einer von einem Computer-Client angeforderten Zufallszahl.

Ein solches Verfahren ist aus **[**1**]** bekannt. Dieses bekannte Verfahren zum Ermitteln einer Zufallszahl weist insbesondere den Nachteil auf, dass es sehr rechenaufwendig ist, eine Zufallszahl gemäß diesem Verfahren zu ermitteln. Insbesondere bei der wachsenden Verbreitung des Einsatzes kryptographischer Verfahren zum Schutz verschiedener Arten von Informationen, beispielsweise zum Schutz von Geschäftsinformationen und Wirtschaftsdaten, ist es erforderlich, eine Zufallszahl einer großen Güte auch in einem großen, verteilten Kommunikationsnetz zur Verfügung zu stellen. Ein solches verteiltes Kommunikationsnetz ist beispielsweise das Internet/Intranet, das heißt ein Kommunikationsnetz, welches zur Kommunikation das **T**ransport **C**ontrol **P**rotocol / **I**nternet **P**rotocol (TCP/IP) verwendet. An ein solches Kommunikationsnetz sind üblicherweise eine Vielzahl Computer angeschlossen. Von den mit dem Kommunikationsnetz verbundenen Computern sind eine Vielzahl Computer lediglich Personal Computer, das heißt Computer, die üblicherweise eine zu geringe Rechenkapazität zur Verfügung stellen, um eine Zufallszahl mit ausreichender Güte erzeugen zu können.

Diese Situation führt dazu, dass auf vielen Computern lediglich eine Zufallszahl geringer Güte erzeugt werden kann, die mit einigem Aufwand durch einen Unbefugten ermittelt werden kann. Auch werden oftmals durchaus nachvollziehbare Quellen wie beispielsweise eine Systemzeit des Computers, eine Prozessstruktur in dem Computer, der Systemstatus etc. zum Erzeugen der Zufallszahl verwendet. Ist es jedoch möglich, eine Zufallszahl ein zweites Mal zu erzeugen bzw. eine erzeugte Zufallszahl unbefugt zu ermitteln, so ist damit jede kryptographische Operation, die auf einer Zufallszahl basiert, in ihrer kryptographischen Sicherheit stark gefährdet.

Eine Zufallszahl findet in verschiedenen Einsatzgebieten Verwendung. So wird beispielsweise eine Zufallszahl häufig als Initialisierungswert im Rahmen einer kryptographischen Operation verwendet, insbesondere zum Erzeugen eines kryptographischen Schlüssels, wie beispielsweise eines Schlüssels gemäß dem **D**ata **E**ncryption **S**tandard (DES). Eine Zufallszahl wird aber auch allgemein in kryptographischen Protokollen eingesetzt, beispielsweise im Verfahren zum Austausch eines kryptographischen Schlüssels gemäß Diffie und Hellman. Dies zeigt die Bedeutung einer Zufallszahl mit hoher Güte, um somit kryptographische Mechanismen mit ausreichender Sicherheit gewährleisten zu können, womit letztlich die gesamte Kommunikationssicherheit oftmals von der Güte einer verwendeten Zufallszahl abhängt.

In diesem Zusammenhang ist anzumerken, dass im Rahmen der Erfindung der Begriff Zufallszahl zu verstehen ist als eine Zahl, die nur mit einem den Qualitätsanforderungen an die Zufallszahl entsprechenden Aufwand nachvollziehbar gebildet werden. Wird der entsprechende Aufwand nicht betrieben, so erscheint die Zufallszahl für einen Dritten als eine willkürlich gewählte Zahl. Es ist zu betonen, dass im Rahmen der Erfindung als Zufallszahl nicht schon ein kryptographischer Schlüssel als solcher zu verstehen ist. Eine Zufallszahl im Sinne der Erfindung ist allerdings beispielsweise auch ein Initialisierungswert, mittels dem ein kryptographischer Schlüssel generiert wird, nicht jedoch der Schlüssel selbst.

Weiterhin ist aus [2] der sogenannte ITU-T X.509-Standard bekannt, in dem mittels der **A**bstract **S**yntax **N**otation Nr.**1** (ASN.1) verschiedene Datentypen im Zusammenhang mit kryptographischen Mechanismen im Internet definiert sind.

Aus **[**3**]** ist eine Übersicht über Verschlüsselungsverfahren sowie Verfahren zur Schlüsselgenerierung und Verwaltung, beispielsweise das Diffie-Hellman-Protokoll bekannt.

Aus den obigen Ausführungen wird ersichtlich, dass ein starkes Bedürfnis nach einer Verfügbarkeit qualitativ hochwertiger Zufallszahlen auch in einem stark verteilten Kommunikationsnetz verschiedener mit einer großen Anzahl Computer mit unterschiedlicher zur Verfügung stehender Rechenkapazität besteht.

Somit liegt der Erfindung das Problem zugrunde, qualitativ hochwertige Zufallszahlen auch in einem stark vernetzten Kommunikationssystem mit einer Vielzahl Computer, die eine geringe Rechenkapazität zur Verfügung stellen, bereitzustellen.

Das Problem wird durch das Verfahren, das Kommunikationssystem sowie durch den Computer-Server mit den Merkmalen gemäß den unabhängigen Ansprüchen gelöst.

Bei einem Verfahren zum Ermitteln einer Zufallszahl von mindestens einem Computer-Server für einen Computer-Client wird von dem Computer-Client eine Anforderungsnachricht an den Computer-Server gesendet. Mit der Anforderungsnachricht wird angefordert, dass der Computer-Server eine Zufallszahl erzeugen soll. Nach Empfang der Anforderungsnachricht erzeugt der Computer-Server aufgrund der Anforderungsnachricht eine Zufallszahl. Anschließend sendet der Computer-Server eine Zufallszahlnachricht an den Computer-Client, in der die von dem Computer-Server erzeugte Zufallszahl enthalten ist. Der Computer-Client empfängt in einem letzten Schritt die Zufallszahlnachricht.

Da der Computer-Server in der Regel eine erheblich höhere Rechenkapazität zur Verfügung stellt als ein Computer-Client, kann gemäß der Erfindung eine qualitativ hochwertige Zufallszahl generiert werden und dem Computer-Client zur Verfügung gestellt werden, so dass der Computer-Client diese hochwertige Zufallszahl in einem weiteren kryptographischen Mechanismus verarbeiten kann. Dadurch ist eine erheblich erhöhte kryptographische Sicherheit gewährleistet für einen von dem Computer-Client zur Verfügung gestellten kryptographischen Mechanismus.

Ein Kommunikationssystem weist eine Vielzahl von Computer-Clients und mindestens einen Computer-Server auf. Jeder Computer-Client weist eine Einheit zum Bilden und Senden einer Anforderungsnachricht an den Computer-Server auf, in der das Erzeugen einer Zufallszahl durch den Computer-Server angefordert wird. Der Computer-Server weist eine Empfangseinheit zum Empfang der Anforderungsnachricht sowie eine Erzeugungseinheit zum Erzeugen einer Zufallszahl aufgrund der Anforderungsnachricht, die von einem Computer-Client gesendet worden ist, auf. Weiterhin weist der Computer-Server eine Einheit zum Bilden und Senden einer Zufallszahlnachricht an den jeweiligen Computer-Client, der die Erzeugung einer Zufallszahl angefordert hat, auf. In der Zufallszahlnachricht ist die von dem Computer-Server erzeugte Zufallszahl enthalten. Weiterhin enthält jeder Computer-Server eine Empfangseinheit zum Empfangen der Zufallszahlnachricht.

Ein Computer-Server zum Erzeugen einer von einem Computer-Client angeforderten Zufallszahl weist eine Empfangseinheit zum Empfangen einer Anforderungsnachricht, die von dem Computer-Client gesendet worden ist, auf. Mit der Anforderungsnachricht wird bei dem Computer-Server beantragt, dass der Computer-Server eine Zufallszahl erzeugt und diese an den Computer-Server zurücksendet. Weiterhin weist der Computer-Server eine Erzeugungseinheit zum Erzeugen einer Zufallszahl und einer Einheit zum Bilden und Senden einer Zufallszahlnachricht an den Computer-Client auf. In der Zufallszahlnachricht ist die von dem Computer-Server erzeugte Zufallszahl enthalten.

Durch die Erfindung wird es somit nunmehr möglich, auch qualitativ hochwertige Zufallszahlen in einem vernetzten Kommunikationssystem mit einer Vielzahl Computer-Clients, deren zur Verfügung stehende Rechenkapazität nicht ausreichend ist, um eine ausreichend "gute" Zufallszahl zu erzeugen, zur Verfügung zu stellen. Damit wird insgesamt auch der Sicherheitsgrad in dem Kommunikationsnetz insgesamt erheblich erhöht, wenn nunmehr die auch in dem Computer-Clients zur Verfügung stehenden Zufallszahlen guter Qualität für weitere kryptographische Mechanismen verwendet werden können.

Bevorzugte Weiterbildungen der Erfindung ergeben sich aus den abhängigen Ansprüchen.

Die im weiteren beschriebenen Ausgestaltungen der Erfindung beziehen sich sowohl auf das Verfahren als auch auf den Computer-Server und das Kommunikationssystem.

Die Ausgestaltungen können sowohl mittels Hardware als auch mittels eines Computerprogramms implementiert werden.

So kann beispielsweise in dem Computer-Server eine spezielle Hardware enthalten sein zum Erzeugen einer qualitativ hochwertigen Zufallszahl. Auf diese Weise wird der Erzeugungsvorgang einer Zufallszahl erheblich beschleunigt, so dass der Computer-Server in der Lage ist, eine Vielzahl von Zufallszahlen innerhalb einer relativ kurzen Zeit zu generieren, was insbesondere in einem Kommunikationssystem mit einer Vielzahl Computer-Clients von erheblicher Bedeutung ist, wenn eine große Zahl von Anforderungen zum Erzeugen einer Zufallszahl von dem Computer-Server bearbeitet werden muss.

In einer Ausgestaltung der Erfindung ist es vorgesehen, dass die Nachrichten zwischen dem Computer-Client und dem Computer-Server über ein Kommunikationsnetz, vorzugsweise über das Internet/Intranet, übertragen werden. Gerade bei dem Kommunikationsnetz, das hauptsächlich für Anwendungen des elektronischen Handels (Electronic Commerce) eingesetzt wird, ist ein großer Sicherheitsgrad der kryptographischen Mechanismen zu der Absicherung des elektronischen Handels in verschiedenen Bereichen von grundlegender Bedeutung. Somit eignet sich die Erfindung insbesondere für das Internet/Intranet als Kommunikationsnetz.

Bevorzugt weist der Computer-Server eine größere Rechenkapazität auf als der Computer-Client.

In einer Weiterbildung der Erfindung ist vorgesehen, dass die Zufallszahl von dem jeweiligen Computer-Client weiterverarbeitet wird, beispielsweise indem die Zufallszahl als Initialisierungswert im Rahmen einer kryptographischen Operation zum Erzeugen eines kryptographischen Schlüssels eingesetzt wird. Die Zufallszahl kann ferner im Rahmen des Erkennens einer unbefugten Wiedereinspielung einer Nachricht verwendet werden. Ein weiteres Einsatzgebiet für die Zufallszahl bei dem Computer-Client ist der Einsatz im Rahmen eines kryptographischen Protokolls, beispielsweise dem Diffie-Hellman Protokoll zum Generieren eines kryptographischen Schlüssels.

Weiterhin kann die Zufallszahl beim Computer-Client zum Erzeugen einer oder mehrerer weiterer Zufallszahlen eingesetzt werden. Auch wenn der Computer-Client mit relativ geringer Rechenkapazität weitere Zufallszahlen erzeugt, so ist doch der Einsatz der qualitativ hochwertigen Zufallszahl des Computer-Servers als einer der beim Erzeugen der Zufallszahl beim Computer-Client verwendeten Parameter ein Garant dafür, dass die sich daraus ergebende Zufallszahl auch eine relativ hohe Güte aufweist. Damit kann auch von einem Computer mit relativ geringer Rechenkapazität noch eine Zufallszahl mit ausreichender Güte erzeugt werden.

Bevorzugt wird die Zufallszahl von dem Computer-Server vor der Übertragung zum Computer-Client verschlüsselt, so dass kein Dritter die Zufallszahl während der Übertragung mittels Abhören abfangen kann, um diese

**EP 1 126 654 A2**

anschließend im Rahmen des Abhörens der weiteren Kommunikation des Computer-Clients, in der die Zufallszahl verwendet wurde zu verwenden. In dieser Ausgestaltung wird bei dem Computer-Client die verschlüsselte Zufallszahl entschlüsselt, um die Zufallszahl in dem Computer-Client zu erhalten.

Ein Ausführungsbeispiel der Erfindung ist in den Figuren dargestellt und wird im weiteren näher erläutert.

Es zeigen

Figur 1     eine Skizze eines Kommunikationsnetzes mit einer Vielzahl von Computer-Clients und einem Computer-Server;

Figur 2     ein Ablaufdiagramm, in dem die einzelnen Verfahrensschritte zum Erzeugen einer ersten Zufallszahl durch den Computer-Server für einen ersten Computer-Client gemäß dem Ausführungsbeispiel dargestellt ist;

Figur 3     ein Ablaufdiagramm, in dem die einzelnen Verfahrensschritte zum Erzeugen einer zweiten Zufallszahl durch den Computer-Server für einen zweiten Computer-Client gemäß dem Ausführungsbeispiel dargestellt ist;

Figur 4     ein Ablaufdiagramm, in dem die Bildung eines Sitzungsschlüssels zwischen dem ersten Computer-Client und dem zweiten Computer-Client unter Verwendung der ersten Zufallszahl und der zweiten Zufallszahl gemäß dem Ausführungsbeispiel dargestellt ist.

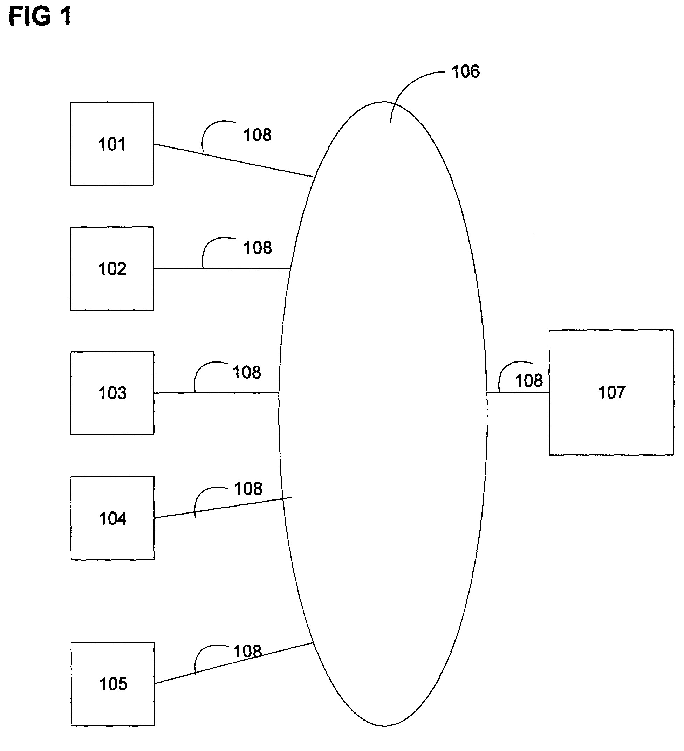

**Fig.1** zeigt ein Kommunikationssystem 100 mit einer Vielzahl von Computer-Clients 101, 102, 103, 104, 105, die mit einem Kommunikationsnetz, dem Internet/Intranet 106, verbunden sind. Die Computer-Clients 101, 102, 103, 104, 105 sind mit dem Internet/Intranet mittels einer Telefonleitung 108 verbunden. Ebenso ist der Computer-Server 107 mit dem Internet/Intranet 106 mittels einer Telefonleitung 108 verbunden.

Im weiteren Ausführungsbeispiel wird davon ausgegangen, dass ein erster Computer-Client 101 und ein zweiter Computer-Client 102 miteinander kommunizieren möchten und dabei einen zu erzeugenden Sitzungsschlüssel K, der gemäß dem Verfahren nach Diffie-Hellman erzeugt werden soll, verwenden wollen.

Wird in dem ersten Computer-Client 101 nun eine Zufallszahl zum Bilden des Sitzungsschlüssels mit dem zweiten Computer-Client 102 benötigt, so wird in einem ersten Schritt 201 eine erste Anforderungsnachricht 203 gemäß dem TCP/IP-Protokoll gebildet, mit der das Erzeugen einer Zufallszahl durch den Computer-Server 107 beantragt wird. Unter Verwendung der **A**bstract **S**yntax **N**otation. 1 (ASN.1) ist gemäß diesem Ausführungsbeispiel die erste Anforderungsnachricht 203 auf folgende Weise definiert:

```
RandomNumberReq        ::= SEQUENCE {


version                INTEGER { v1 (0) },
requestorEncrCertPath  CertificationPath,
randomNumberLength     INTEGER,
requestID              INTEGER

}
```

Die erste Anforderungsnachricht 203, gemäß ASN.1 als "RandomNumberReq" bezeichnet, enthält ein Versionsfeld "version", mit dem die zu verwendende Version des Kommunikationsprotokolls zum Erzeugen der Zufallszahl angegeben ist. Ein weiteres Feld in der Anforderungsnachricht 203 ist die Angabe des Zertifizierungspfads "requestorEncrCertPath" des Benutzers, das heißt die Angabe des Pfades in dem Kommunikationsnetz zu dem Verzeichnis, in dem der zertifizierte öffentliche Schlüssel des Benutzers, das heißt des ersten Computer-Clients 101, zu finden ist. In dem Feld "randomNumberLength" ist die Anzahl der angeforderten Zufallszahlenbits als Zahlenwert (Integerwert) angegeben, das heißt die Länge der angeforderten Zufallszahl in Bit. Ein weiteres Feld "requestID" ist eine vorgebbare eindeutig vergebene Zahl zur möglichen Identifizierung der ersten Zufallszahl, wenn diese von dem ersten Computer-Client 101 empfangen worden ist.

In einem weiteren Schritt (202) wird die erste Anforderungsnachricht 203 von dem ersten Computer-Client 101 an den Computer-Server 107 gesendet.

Nachdem der Computer-Server 107 die erste Anforderungsnachricht 203 empfangen hat (Schritt 204), er-

4

zeugt der Computer-Server 107 aufgrund der ersten Anforderungsnachricht 203 eine erste Zufallszahl mit der Länge, die in dem Feld "randomNumberLength" der Anforderungsnachricht 203 angegeben ist (Schritt 205).

Als Verfahren zum Erzeugen der ersten Zufallszahl, wie auch der im weiteren beschriebenen zweiten Zufallszahl wird gemäß dem Ausführungsbeispiel das in **[1]** beschriebene Verfahren eingesetzt.

Nachdem die erste Zufallszahl von dem Computer-Server 107 erzeugt worden ist (Schritt 205) wird die Güte der Zufallszahl bestimmt, und das Verfahren wird nur weitergeführt, wenn die ermittelte Güte der ersten Zufallszahl größer ist als ein vorgegebener Gütewert (Schritt 206).

Das Überprüfen der Güte der ersten Zufallszahl erfolgt in einem Prüfschritt 207.

Das Verfahren wird abgebrochen (Schritt 208) oder wiederholt (Schritt 205), wenn die Güte kleiner ist als der vorgegebene Gütewert.

Ist die Güte größer oder gleich dem vorgegebenen Gütewert, das heißt ist die erste Zufallszahl von ausreichend hoher Qualität, so wird die erste Zufallszahl mit dem öffentlichen Schlüssel des Benutzers des ersten Computer-Clients 101, der über den "Requestor Encryption Certification Path" des Benutzers, angegeben in der ersten Anforderungsnachricht 203, ermittelt wurde, verschlüsselt (Schritt 209).

In einem weiteren Schritt (Schritt 210) wird eine erste Zufallszahlnachricht 212 gebildet und die erste Zufallszahlnachricht 212 wird von dem Computer-Server 107 an den Computer-Client 101 gesendet (Schritt 211).

In der ersten Zufallszahlnachricht 212 ist die verschlüsselte erste Zufallszahl enthalten.

Gemäß dem ASN.1-Standard weist die erste Zufallszahlnachricht 212 folgende Struktur auf:

```
        RandomNumberRes        ::= SEQUENCE {



        version                           INTEGER { v1 (0) },
        encryptionAlgorithm               AlgorithmIdentifier,
        randomNumberServiceCertPath       CertificationPath,
        EncryptedRNResponse               BIT STRING
    }


    EncryptedRNResponse ::= SIGNED SEQUENCE {
        requestID                         INTEGER,
        randomNumberServiceName           Name,
        RandomNumber                      BIT STRING
    }
```

Gemäß der oben dargestellten Definition der ersten Zufallszahlnachricht 212 wie auch einer im weiteren beschriebenen zweiten Zufallszahl 312 in ASN.1 enthält diese ein Versionsfeld "version" mit der gleichen, im Zusammenhang mit der ersten Anforderungsnachricht 203 beschriebenen Bedeutung, ein Feld mit der Angabe "encryptionAlgorithm", mit dem angegeben ist, welcher Verschlüsselungsalgorithmus zur Verschlüsselung der ersten Zufallszahl verwendet worden ist, sowie in einem weiteren Feld die Pfadangabe "randomNumberServiceCertPath", mit dem angegeben ist, wo der zertifizierte öffentliche Schlüssel des Computer-Servers 107 erhältlich ist.

In einem weiteren Feld des Typs BIT STRING ist die mit dem öffentlichen Schlüssel des Benutzers, das heißt des ersten Computer-Clients 101, verschlüsselte erste Zufallszahl als "EncryptedRNResponse" enthalten. In der "SIGNED SEQUENCE" ist die in der ersten Anforderungsnachricht 203 enthaltene "requestID" ebenfalls als Feld vorgesehen, so dass der erste Computer-Client 101 die erste Zufallszahlnachricht 212 korrekt und eindeutig zuordnen kann. Weiterhin ist eine eindeutige Namensangabe des Dienstes zum Erzeugen der ersten Zufallszahl in dem Feld "randomNumberServiceName" angegeben. Schließlich ist die erste Zufallszahl selbst in dem Feld "RandomNumber" angegeben. Die ASN.1-Sequenz "EncryptedRNResponse" wird von dem Computer-Server 107 mit dessen geheimen Schlüssel signiert. Damit ist es für den ersten Computer-Client 101 möglich, die empfangene Antwortnachricht, d.h. die erste Zufallszahlnachricht 212 mit dem öffentlichen Schlüssel des Computer-Servers 107, den er unter Verwendung des angegebenen Pfades erhalten kann, zu verifizieren.

Die Definitionen der weiterhin verwendeten Basistypen "Name", "CertificationPath", "AlgorithmIdentifier" sowie das Makro "SIGNED" sind in **[2]**, das heißt in dem Standard ITU-T X.509, definiert und werden in gleicher Weise in diesem Ausführungsbeispiel verwendet.

Die erste Zufallszahlnachricht 212 wird von dem ersten Computer-Client 101 in einem weiteren Schritt empfangen (Schritt 213).

In einem weiteren Schritt wird mittels des öffentlichen Schlüssels des Computer-Server 107 die erste Zufallszahlnachricht 212 verifiziert und mit dem geheimen Schlüssel des Benutzers des Computer-Clients 101 wird die verschlüsselte erste Zufallszahl in der ersten Zufallszahlnachricht 212 entschlüsselt, so dass nunmehr die erste Zufallszahl ausreichender Güte in dem ersten Computer-Client 101 verfügbar ist (Schritt 214).

Die erste Zufallszahl wird in dem ersten Computer-Client 101 gespeichert.

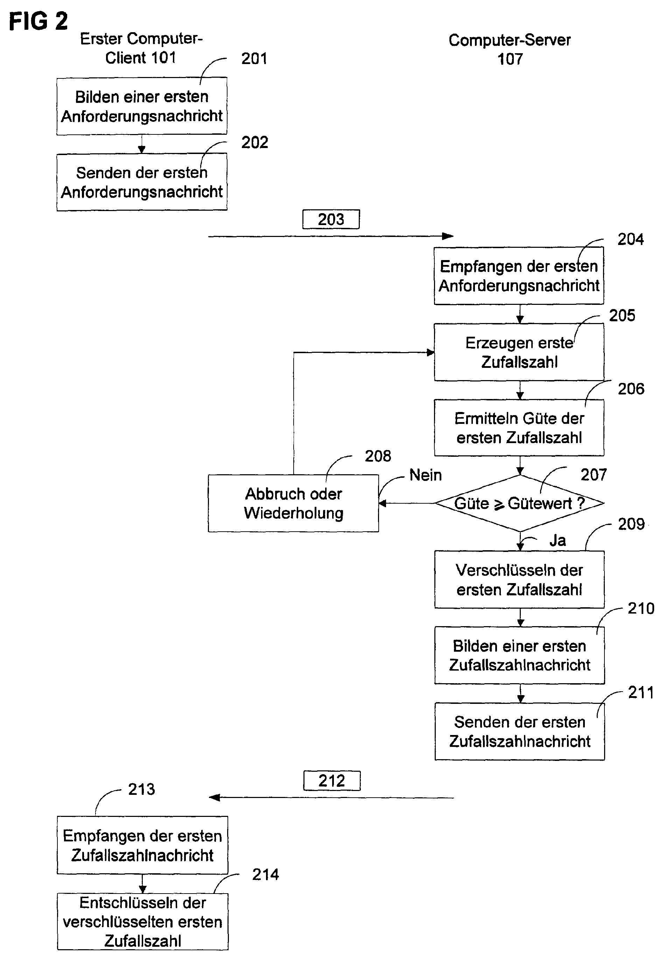

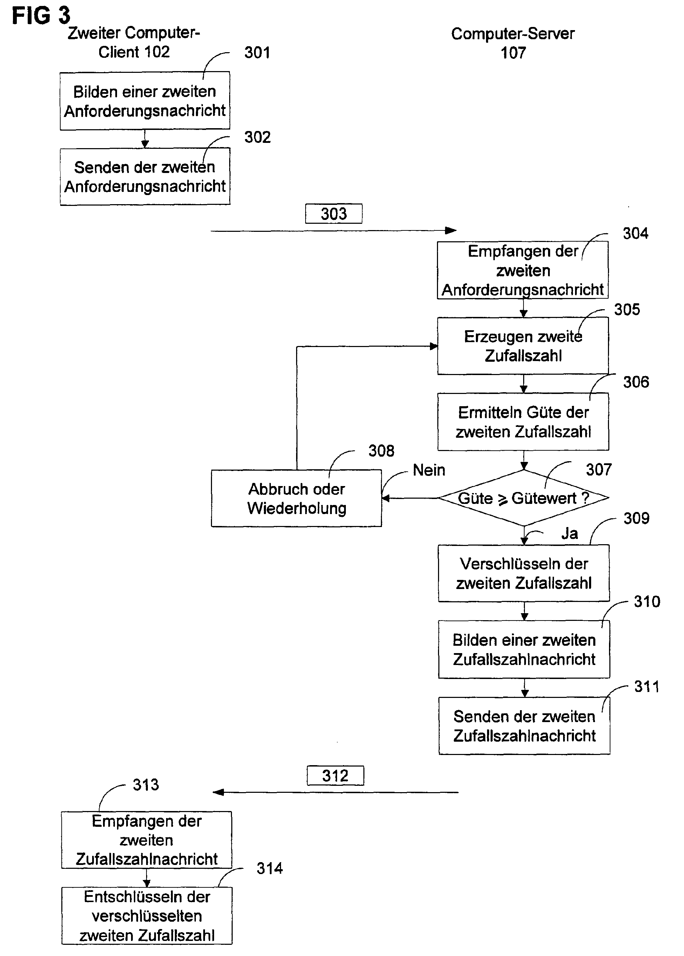

In **Fig.3** ist in einem Ablaufdiagramm das entsprechende Verfahren, welches in **Fig.2** dargestellt wurde für den ersten Computer-Client 101, zum Ermitteln einer zweiten Zufallszahl für den zweiten Computer-Client 102 dargestellt.

Es wird wiederum eine Anforderungsnachricht, eine zweite Anforderungsnachricht 303, gebildet (Schritt 301) und in einem weiteren Schritt (Schritt 302) von dem zweiten Computer-Client 102 an den Computer-Server 107 gesendet.

Wiederum enthält die zweite Anforderungsnachricht 303 gemäß der oben definierten Struktur der ersten Anforderungsnachricht 203 die Angabe der Version, den Pfad zum Zertifikat des öffentlichen Schlüssels diesmal des Benutzers des zweiten Computer-Clients 102 sowie die angeforderte Länge der zweiten Zufallszahl und eine für die Antwortnachricht mit der erzeugten zweiten Zufallszahl eindeutige Identifizierungsangabe.

Die zweite Anforderungsnachricht 303 wird von dem Computer-Server 107 empfangen (Schritt 304) und es wird eine zweite Zufallszahl in einem weiteren Schritt (Schritt 305) erzeugt. Nachdem die Güte der zweiten Zufallszahl ermittelt worden ist (Schritt 306) wird in einem Prüfschritt 307 überprüft, ob die Güte ausreichend ist, das heißt ob die Güte größer oder gleich ist als der vorgegebene Gütewert. Ist dies nicht der Fall, so wird das Verfahren abgebrochen (Schritt 308) oder wiederholt (Schritt 305).

Ist jedoch die Güte größer oder gleich dem vorgegebenen Gütewert, so wird die zweite Zufallszahl mit dem öffentlichen Schlüssel des Benutzers des zweiten Computer-Client 102, der von dem Computer-Server unter Verwendung des in der zweiten Anforderungsnachricht 303 angegebenen Zertifizierungspfads erhaltenen öffentlichen Schlüssels des Benutzers verschlüsselt (Schritt 309).

In einem weiteren Schritt (310) wird eine zweite Zufallszahlnachricht 312 gebildet, deren Struktur der oben definierten Struktur der ersten Zufallszahlnachricht 212 entspricht und die zweite Zufallszahl sowie die Pfadangabe zum Zertifikat des öffentlichen Schlüssels des Computer-Server 107 enthält, gebildet.

In einem weiteren Schritt (Schritt 311) wird die zweite Zufallszahlnachricht 312 an den zweiten Computer-Client 102 gesendet.

Der zweite Computer-Client 102 empfängt die zweite Zufallszahlnachricht 312, verifiziert diese unter Verwendung des öffentlichen Schlüssels des Computer-Servers 107 und entschlüsselt die zweite Zufallszahl mittels des geheimen Schlüssels des Benutzers des zweiten Computer-Clients 102 (Schritt 314). Nunmehr liegt die zweite Zufallszahl ausreichender Güte in dem zweiten Computer-Client 102 vor, wo sie gespeichert wird.

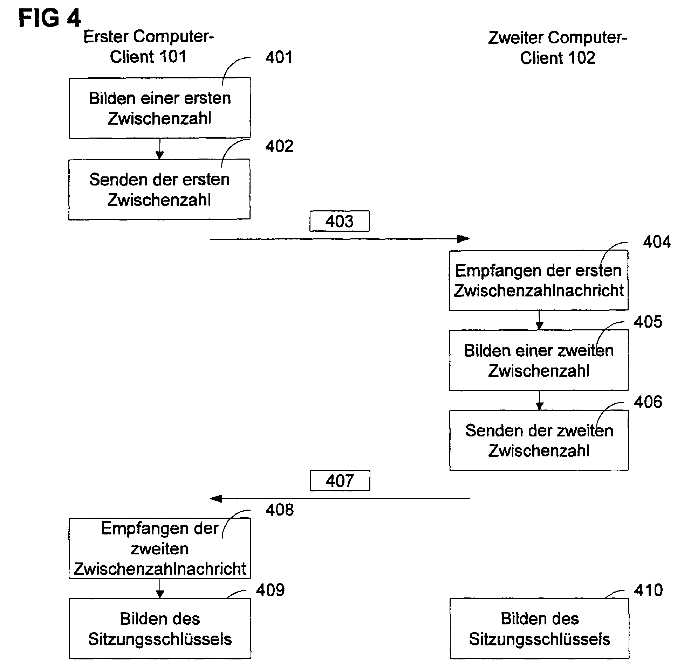

Der erste Computer-Client 101 berechnet aus der ersten Zufallszahl $x_A$ unter Verwendung zweier frei gewählter ausreichend großer Zahlen a und p, wobei p eine Primzahl ist und die Zahlen a und p sowohl dem ersten Computer-Client 101 als auch dem zweiten Computer-Client 102 bekannt sind, eine erste Zwischenzahl $y_A$ (Schritt 401) gemäß folgender Vorschrift, wie in **Fig.4** dargestellt:

$$y_A = a^{x_A} \bmod p \,. \tag{1}$$

Der erste Computer-Client 101 sendet die erste Zwischenzahl $y_A$ in einem weiteren Schritt (Schritt 402) in einer ersten Zwischenzahlnachricht 403 an den zweiten Computer-Client 102. Der zweite Computer-Client 102 empfängt die erste Zwischenzahlnachricht 403 (Schritt 404) und erzeugt seinerseits eine zweite Zwischenzahl $y_B$ unter Verwendung der zweiten Zufallszahl $x_B$ sowie der Zahlen a und p gemäß folgender Vorschrift (Schritt 405):

$$y_B = a^{x_B} \bmod p. \tag{2}$$

Der zweite Computer-Client 102 sendet die zweite Zwischenzahl $y_B$ in einem weiteren Schritt (Schritt 406) in einer zweiten Zwischenzahlnachricht 407 an den ersten Computer-Client 101.

Von dem ersten Computer-Client 101 wird in einem weiteren Schritt (Schritt 408) die zweite Zwischenzahlnachricht 407 empfangen.

Nach Empfang der zweiten Zwischenzahlnachricht 407 wird in dem ersten Computer-Client 101 der Sitzungsschlüssel $K_A$ gemäß folgender Vorschrift gebildet (Schritt 409):

$$K = K_A = (y_B)^{xA} \bmod p. \tag{3}$$

In dem zweiten Computer-Client 102 wird ebenfalls der Sitzungsschlüssel $K_B$ gebildet, jedoch gemäß folgender Vorschrift (Schritt 410):

$$K = K_B = (y_A)^{xB} \bmod p. \tag{4}$$

Die Schlüssel $K_A$ bzw. $K_B$ werden für die weitere Kommunikation zwischen dem ersten Computer-Client 101 und dem zweiten Computer-Client 102 als Sitzungsschlüssel K verwendet und werden aus diesem Grunde in dem jeweils ersten Computer-Client 101 bzw. dem zweiten Computer-Client 102 gespeichert.

Im weiteren werden einige Alternativen zu dem oben dargestellten Ausführungsbeispiel erläutert:

Es können in dem Kommunikationsnetz mehrere Computer-Server vorgesehen sein, die den Dienst des Erzeugens einer qualitativ hochwertigen Zufallszahl für unterschiedliche Computer-Clients zur Verfügung stellen.

Weiterhin kann die Zufallszahl von einem Computer-Client für jeden beliebigen kryptographischen Mechanismus weiterverwendet werden, beispielsweise auch als Initialisierungswert im Rahmen einer kryptographischen Operation, beispielsweise zum Erzeugen eines kryptographischen Schlüssels.

Die Zufallszahl kann jedoch auch im Rahmen des Erkennens eines unbefugten Wiedereinspielens einer Nachricht eingesetzt werden. Ferner kann die Zufallszahl eingesetzt werden in einem kryptographischen Protokoll, wie dies oben in dem Ausführungsbeispiel beschrieben worden ist.

Auch kann die Zufallszahl zum Erzeugen einer weiteren Zufallszahl abhängig von der von dem Computer-Server erzeugten Zufallszahl eingesetzt werden.

Weiterhin ist darauf hinzuweisen, dass die Verbindung der Computer-Clients 101, 102, 103, 104, 105 mit dem Kommunikationsnetz 106 sowie die Verbindung des Computer-Server 107 mit dem Kommunikationsnetz 106 nicht mittels einer Telefonleitung 108, sondern mittels jeder beliebigen Kommunikationsverbindung, beispielsweise einer Funkverbindung, erfolgen kann.

In diesem Dokument sind folgende Veröffentlichungen zitiert:

**[1]** D. Eastlake, S. Crocker, Randomness Recommendations for Security, RFC 1750, 1994

**[2]** ITU-T, Data networks and open system communications, ITU-T X.509, Version 8/1997

**[3]** G. Marsaglia, Elsevier Press, A Current View of Random Number Generators, 1984

**Patentansprüche**

**1.** Verfahren zum Ermitteln einer Zufallszahl von mindestens einem Computer-Server für einen Computer-Client,

a) bei dem der Computer-Client an den Computer-Server eine Anforderungsnachricht sendet, mit der das Erzeugen einer Zufallszahl angefordert wird,
b) bei dem der Computer-Server die Anforderungsnachricht empfängt,
c) bei dem der Computer-Server aufgrund der Anforderungsnachricht eine Zufallszahl erzeugt,
d) bei dem der Computer-Server eine Zufallszahlnachricht an den Computer-Client sendet, wobei in der Zufallszahlnachricht die von dem Computer-Server erzeugte Zufallszahl enthalten ist, und
e) bei dem der Computer-Client die Zufallszahlnachricht empfängt.

**2.** Verfahren nach Anspruch 1, bei dem die Nachrichten zwischen dem Computer-Client und dem Computer-Server über ein Kommunikationsnetz übertragen werden.

**3.** Verfahren nach Anspruch 2, bei dem als Kommunikationsnetz das Internet/Intranet verwendet wird.

**4.** Verfahren nach einem der Ansprüche 1 bis 3, bei dem der Computer-Server eine größere Rechenkapazität aufweist als der Computer-Client.

**5.** Verfahren nach einem der Ansprüche 1 bis 4, bei dem die Zufallszahl von dem Computer-Client weiterverarbeitet wird.

**6.** Verfahren nach Anspruch 5, bei dem die Zufallszahl als Initialisierungswert im Rahmen einer kryptographischer Operation verwendet wird.

**7.** Verfahren nach Anspruch 5 oder 6, bei dem die Zufallszahl eingesetzt wird zum Erzeugen eines kryptographischen Schlüssels.

**8.** Verfahren nach Anspruch 5, bei dem die Zufallszahl im Rahmen des Erkennens des unbefugten Wiedereinspielens verwendet wird.

**9.** Verfahren nach Anspruch 5, bei dem die Zufallszahl eingesetzt wird in einem kryptographischen Protokoll.

**10.** Verfahren nach Anspruch 5, bei dem die Zufallszahl eingesetzt wird zum Erzeugen einer weiteren Zufallszahl abhängig von der Zufallszahl.

**11.** Verfahren nach einem der Ansprüche 1 bis 10, bei dem die Güte der Zufallszahl überprüft wird und die Zufallszahl nur verwendet, wenn die Güte größer ist als ein vorgebbarer Gütewert.

**12.** Verfahren nach einem der Ansprüche 1 bis 11,

a) bei dem die Zufallszahl von Computer-Server verschlüsselt wird, und
b) bei dem die verschlüsselte Zufallszahl von dem Computer-Client entschlüsselt, womit die Zufallszahl ermittelt wird.

**13.** Kommunikationssystem mit einer Vielzahl von Computer-Clients und mindestens einem Computer-Server,

a) bei dem jeder Computer-Client eine Einheit zum Bilden und Senden einer Anforderungsnachricht an den Computer-Server aufweist, wobei in der Anforderungsnachricht das Erzeugen einer Zufallszahl angefordert wird,
b) bei dem der Computer-Server eine Empfangseinheit zum Empfangen der Anforderungsnachricht aufweist,
c) bei dem der Computer-Server eine Erzeugungseinheit zum Erzeugen einer Zufallszahl aufweist,
d) bei dem der Computer-Server eine Einheit zum Bilden und Senden einer Zufallszahlnachricht an den jeweiligen Computer-Client aufweist, wobei in der Zufallszahlnachricht die von dem Computer-Server erzeugte Zufallszahl enthalten ist, und
e) bei dem jeder Computer-Client eine Empfangseinheit zum Empfangen der Zufallszahlnachricht aufweist.

**14.** Computer-Server zum Erzeugen einer von einem Computer-Client angeforderten Zufallszahl, mit

a) einer Empfangseinheit zum Empfangen einer Anforderungsnachricht, die von dem Computer-Client gesendet worden ist, wobei mit der Anforderungsnachricht das Erzeugen einer Zufallszahl angefordert wird,
b) einer Erzeugungseinheit zum Erzeugen einer Zufallszahl, und
c) einer Einheit zum Bilden und Senden einer Zufallszahlnachricht an den Computer-Client, wobei in der Zufallszahlnachricht die von dem Computer-Server erzeugte Zufallszahl enthalten ist.

# FIG 1

# FIG 2

Erster Computer-
Client 101

Computer-Server
107

201
Bilden einer ersten
Anforderungsnachricht

202
Senden der ersten
Anforderungsnachricht

203

204
Empfangen der ersten
Anforderungsnachricht

205
Erzeugen erste
Zufallszahl

206
Ermitteln Güte der
ersten Zufallszahl

208
Abbruch oder
Wiederholung

Nein

207
Güte ≥ Gütewert ?

Ja
209
Verschlüsseln der
ersten Zufallszahl

210
Bilden einer ersten
Zufallszahlnachricht

211
Senden der ersten
Zufallszahlnachricht

212

213
Empfangen der ersten
Zufallszahlnachricht

214
Entschlüsseln der
verschlüsselten ersten
Zufallszahl

# FIG 3

Zweiter Computer-
Client 102

Computer-Server
107

301

Bilden einer zweiten
Anforderungsnachricht

302

Senden der zweiten
Anforderungsnachricht

303

304

Empfangen der
zweiten
Anforderungsnachricht

305

Erzeugen zweite
Zufallszahl

306

Ermitteln Güte der
zweiten Zufallszahl

308

Abbruch oder
Wiederholung

Nein

307

Güte ≥ Gütewert ?

Ja

309

Verschlüsseln der
zweiten Zufallszahl

310

Bilden einer zweiten
Zufallszahlnachricht

311

Senden der zweiten
Zufallszahlnachricht

312

313

Empfangen der
zweiten
Zufallszahlnachricht

314

Entschlüsseln der
verschlüsselten
zweiten Zufallszahl

# FIG 4

Erster Computer-
Client 101

Zweiter Computer-
Client 102

401
Bilden einer ersten
Zwischenzahl

402
Senden der ersten
Zwischenzahl

403

404
Empfangen der ersten
Zwischenzahlnachricht

405
Bilden einer zweiten
Zwischenzahl

406
Senden der zweiten
Zwischenzahl

407

408
Empfangen der
zweiten
Zwischenzahlnachricht

409
Bilden des
Sitzungsschlüssels

410
Bilden des
Sitzungsschlüssels